# DEMANDE DE BREVET EUROPEEN

(11) **EP 0 766 034 A1**
(43) Date de publication de la demande: **02.04.1997**
(21) Numéro de dépôt: 96420298.0
(22) Date de dépôt: 19.09.1996
(51) Int. Cl.: F16L 41/08

(54) **Dispositif de raccordement d'éléments tubulaires sur des corps de valves**

(30) Priorité: 29.09.1995 FR 9511758
(71) Demandeur: BTR VALVES S.A., F-42240 Unieux (FR)
(72) Inventeur: Butigieg, Guy Laurent, 42100 Saint Etienne (FR)
(74) Mandataire: Dupuis, François

(57) **Abrégé**

Le dispositif de liaison par raccordement d'éléments tubulaires sur des corps d'éléments de robinetterie, et notamment de valve, est remarquable en ce que l'élément tubulaire (5) est disposé dans un plan angulaire α par rapport au corps (1) de valve, et en ce qu'il est réalisé dans l'épaisseur réceptrice du corps de valve, un logement (la) profilé et notamment circulaire, et tout autour de ce logement une gorge (8) circulaire établie sur une partie de l'épaisseur de la zone de fixation du corps de valve en définissant une fente dans une profondeur appropriée et assurant un affranchissement de la liaison de l'élément tubulaire avec le reste du corps de valve, ladite gorge circulaire et concentrique au logement extérieurement définissant une collerette circulaire (1c) formant manchon, la liaison étant effectuée par tout moyen du type soudure, collage ou autre, et dans un même plan axial de l'élément tubulaire (5) avec la collerette (1 c).

## Description

L'invention se rattache au secteur technique des équipements de raccordement d'éléments de tuyauterie et de distribution de fluide (eau, gaz et autres fluides compatibles), et tout particulièrement aux valves qui sont destinées à permettre l'écoulement ou l'arrêt en circulation du fluide.

Il est connu d'utiliser des valves qui sont réalisées en un matériau thermoplastique.

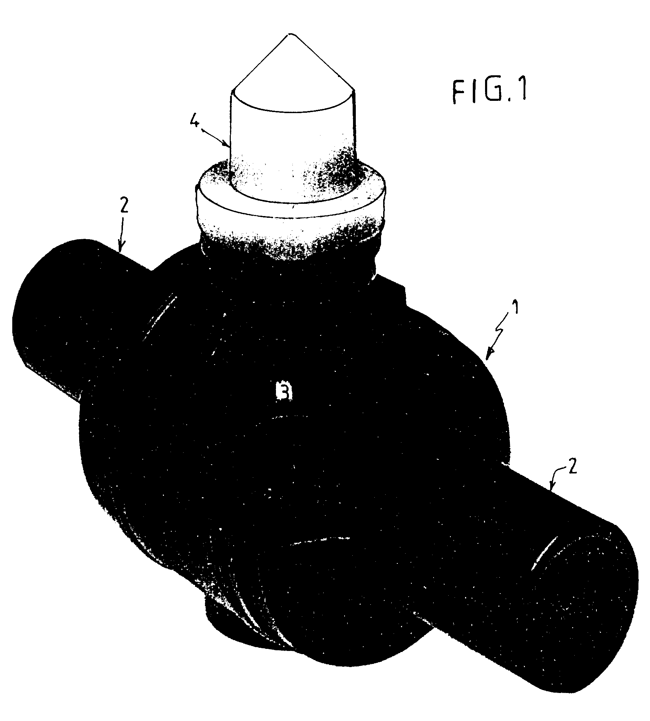

Ces valves sont représentées par exemple, et non limitativement, figure 1. Elles comprennent un corps (1) présentant, dans un plan axial, des embouts (2) opposés permettant l'adaptation et le jointement de tuyaux. Intérieurement, le corps est agencé avec un élément de fermeture du type vanne (3) ou boisseau commandé en position par un moyen de manoeuvre (4) type robinet ou autre. L'ensemble du corps de valve est réalisé monobloc ou non ou soudé avec les embouts d'extrémité.

Ce genre de produit est largement utilisé en offrant toutes les garanties de fiabilité et de sécurité.

Ce genre de produit est destiné à être enterré et normalement son utilisation est prévue pour de très longues années entre 30 et 50 ans.

Ce genre de matériel peut nécessiter l'utilisation d'un élément purgeur se présentant sous forme de tube (5) également en matériau thermoplastique rapporté et fixé perpendiculairement au corps de valve, ledit tube étant en communication avec une ouverture ou conduit (6) ménagé dans l'épaisseur du corps et débouchant à l'intérieur de celui-ci pour permettre la purge d'air.

Le problème posé réside dans le fait que l'élément tubulaire (5) constitutif du moyen de purge est fixé directement par soudure (7) sur le corps de valve. Il s'avère en pratique que, lors des essais de qualification (vieillissement, flexion, ...) effectués sur des valves et conformément aux normes établies, il arrive très fréquemment que les soudures lâchent par suite de la propagation des effets et sollicitations mécaniques, apparaissant sur le matériau du corps de valve. Cette situation est particulièrement gênante car cela entraîne la perte globale de la valve qui est détériorée et inutilisable.

Le Demandeur confronté à ce problème a été amené à réfléchir à la recherche d'une solution permettant d'obvier à l'inconvénient précité.

La difficulté résidait dans le fait que, selon la pratique courante, les éléments tubulaires du type purgeurs sont fixés perpendiculairement au corps de valve.

Il est connu par ailleurs, dans la réalisation d'assemblages d'éléments de raccords en matériau thermoplastique, d'utiliser différentes techniques de soudure par chauffage qui sont effectuées lorsque les éléments à assembler sont disposés coaxiaux. On pratique par exemple la soudure dite "bout à bout" ou par emboîture ou par l'utilisation d'un manchon d'accouplement intermédiaire électro-soudable.

La démarche du Demandeur a donc été de rechercher comment transformer le mode de liaison dans un plan perpendiculaire de l'élément tubulaire du purgeur ou autre moyen similaire avec le corps de valve, en essayant de transposer les connaissances actuelles du soudage de pièces thermoplastiques disposées axialement.

Après différentes études, recherches et essais, une solution originale a été retenue par le Demandeur qui semble répondre, de manière très satisfaisante, aux différentes contraintes et sollicitations de la valve, lors des essais de qualification effectués dans le cadre strict des normes actuelles.

La solution apportée reste simple à mettre en oeuvre et permet d'affranchir la zone de liaison de l'élément tubulaire fixé au corps de valve des différentes contraintes et sollicitations de la valve lors des essais de qualification.

Selon l'invention et une première caractéristique, le dispositif d'accouplement entre l'élément tubulaire disposé dans un plan angulaire α par rapport au corps de valve, est remarquable en ce qu'il est réalisé dans l'épaisseur réceptrice du corps de valve, un logement profilé et notamment circulaire, et tout autour de ce logement une gorge circulaire établie sur une partie de l'épaisseur de la zone de fixation du corps de valve en définissant une fente dans une profondeur appropriée et assurant un affranchissement de la liaison de l'élément tubulaire avec le reste du corps de valveladite gorge circulaire et concentrique au logement extérieurement, définissant une collerette circulaire (1c) formant manchon, la liaison étant effectuée par tout moyen du type soudure, collage ou autre, et dans un même plan axial de l'élément tubulaire avec la collerette.

Selon une autre caractéristique de l'invention, le procédé de mise en oeuvre est obtenu par la réalisation, dans l'épaisseur du corps de valve, d'un logement de préférence circulaire pouvant permettre le positionnement de l'extrémité de profil identique de l'élément tubulaire, ce logement étant en communication avec un conduit débouchant à l'intérieur du corps de valve, et en ce que l'on procède, à l'aide d'un outil, à la réalisation d'une gorge circulaire disposée concentrique et extérieurement au logement de l'élément tubulaire en définissant une zone de rupture de matière dans le corps, et une collerette circulaire formant manchon entourant l'élément tubulaire après fixation, en vue d'une liaison dans un plan axial.

Selon une autre caractéristique, la collerette circulaire est établie sur une large épaisseur pour permettre la fixation de l'élément tubulaire par soudure.

Ces caractéristiques et d'autres encore ressortiront bien de la suite de la description.

Pour fixer l'objet de l'invention illustré non limitativement aux figures des dessins où :

La figure 1 est une vue selon l'art antérieur d'une valve.

La figure 2 est une vue partielle à grande échelle illustrant la liaison par soudure et selon l'art antérieur d'un élément tubulaire du type purgeur sur la valve de la figure 1.

La figure 3 est une vue partielle à grande échelle et en coupe illustrant le dispositif de liaison selon l'invention.

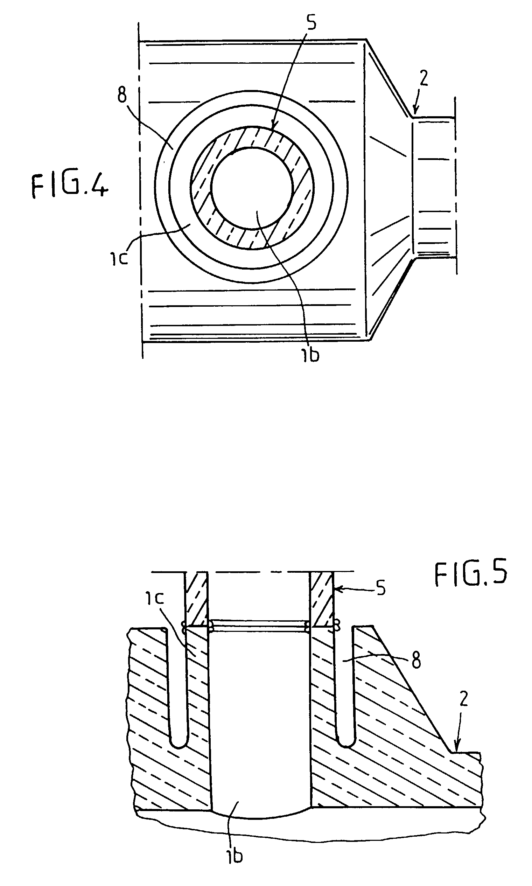

La figure 4 est une vue en plan selon la ligne A-A de la figure 3.

La figure 5 est une vue en variante du moyen de liaison selon la figure 3 dans un positionnement bout à bout.

Afin de rendre plus concret l'objet de l'invention, on le décrit maintenant d'une manière non limitative aux figures des dessins.

Les éléments constitutifs de la valve rappelés précédemment et illustrés figure 1, sont conservés sans modification de leur référence.

Selon l'invention, l'élément tubulaire (5) du purgeur est rapporté et positionné par rapport à un logement (la) formé dans le corps de la valve, ce logement étant profilé et notamment circulaire pour assurer le maintien de l'extrémité dudit élément profilé de manière complémentaire. Ce logement (la) est prolongé par un conduit (1b) établi dans l'épaisseur du corps pour déboucher à l'intérieur du corps de valve afin d'assurer la fonction recherchée. Autour de ce logement, est établi, dans une angulation α donnée une gorge circulaire (8) disposée perpendiculaire ou oblique et sur une profondeur appropriée en définissant ainsi une zone de rupture de matière autour dudit logement. Cette gorge circulaire est concentrique au logement extérieurement à celui-ci, en définissant une collerette (1c) tubulaire d'épaisseur appropriée pour permettre la liaison et la fixation avec l'élément tubulaire extérieur (5) du type purgeur. Cette gorge circulaire permet d'affranchir la zone de liaison de l'élément tubulaire (5) avec le corps de valve de toutes les contraintes et sollicitations mécaniques ou autres engendrées lors notamment des essais de vieillissement. La liaison de l'élément tubulaire (5) dans le logement ainsi établi, est assurée par soudure, collage ou autre.

Dans le cas d'une liaison par soudure bout à bout représentée figure 5, l'élément tubulaire vient bout à bout sur le chant de la collerette préétablie.

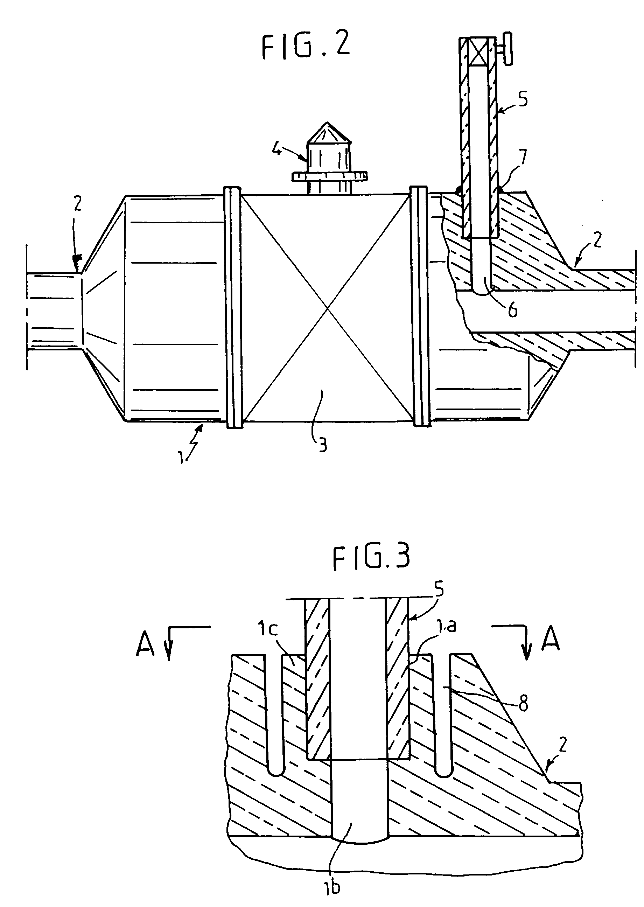

Dans le cas d'une liaison par soudure par emboîture (figure 3), il est procédé, d'une manière connue, au chauffage des parois intérieure de la collerette et extérieure de l'élément tubulaire (5) pour ensuite, après emmanchement, obtenir par polymérisation une liaison ferme entre elles.

La solution décrite permet ainsi d'obtenir une liaison de l'élément tubulaire (5) avec le corps de valve par un emboîtement axial grâce à l'aménagement et à la conformation de la collerette qui fait office de manchon récepteur en assurant un positionnement axial de l'élément (5) avec la collerette. L'établissement de la gorge circulaire permet en outre d'obtenir des variations de positionnement et une souplesse d'orientation de l'élément tubulaire (5). La collerette est établie sur une large épaisseur pour tenir compte de la section de l'élément tubulaire.

L'outil nécessaire à la réalisation de la gorge circulaire est connu en soi. Il peut s'agir d'un outil de découpe, à cloche ou autre.

Le procédé selon l'invention consiste ainsi à réaliser, dans l'épaisseur du corps de valve, un logement de préférence circulaire pouvant permettre le positionnement de l'extrémité de l'élément tubulaire du purgeur, également en matériau thermoplastique. Ce logement est en communication avec le conduit débouchant dans l'intérieur du corps de valve. On procède ensuite à la réalisation d'une gorge circulaire orientée angulairement perpendiculairement ou en oblique par rapport à l'axe longitudinal de la valve en définissant une collerette formant manchon disposée axialement dans le plan de positionnement de l'élément tubulaire formant purgeur. On procède ensuite à la liaison par soudure, collage ou autrement de l'élément tubulaire formant purgeur dans son logement.

Les avantages ressortent bien de l'invention et on souligne la simplicité de l'invention, le respect strict des modalités de liaison de l'élément tubulaire formant purgeur par rapport au corps de valve, selon les normes actuelles par un positionnement axial.

## Revendications

1. Dispositif de liaison par raccordement d'éléments tubulaires sur des corps d'éléments de robinetterie, et notamment de valve, caractérisé en ce que l'élément tubulaire (5) est disposé dans un plan angulaire α par rapport au corps (1) de valve,
et en ce qu'il est réalisé dans l'épaisseur réceptrice du corps de valve, un logement (la) profilé et notamment circulaire, et tout autour de ce logement une gorge (8) circulaire établie sur une partie de l'épaisseur de la zone de fixation du corps de valve en définissant une fente dans une profondeur appropriée et assurant un affranchissement de la liaison de l'élément tubulaire avec le reste du corps de valve, ladite gorge circulaire et concentrique au logement extérieurement définissant une collerette circulaire (1c) formant manchon, la liaison étant effectuée par tout moyen du type soudure, collage ou autre, et dans un même plan axial de l'élément tubulaire (5) avec la collerette (1c).

2. Dispositif de liaison selon la revendication 1, caractérisé en ce que la collerette (1c) circulaire est établie sur une large épaisseur pour permettre la fixation de l'élément tubulaire par soudure.

3. Dispositif de liaison selon l'une quelconque des revendications 1 et 2, caractérisé en ce que la liaison entre l'élément tubulaire (5) du purgeur et le corps de valve est obtenue par soudure bout à bout sur le chant de ladite collerette.

4. Dispositif de liaison selon les revendications 1 et 2, caractérisé en ce que la liaison entre l'élément tubulaire (5) du purgeur et le corps de valve est obtenue par soudure par emboîture, l'extrémité de l'élément tubulaire pénétrant partiellement dans le logement (la).

5. Dispositif de liaison selon la revendication 1, caractérisé en ce que la liaison entre l'élément tubulaire (5) du purgeur et le corps de valve est obtenue par collage.

6. Procédé de liaison par raccordement d'élément tubulaire sur des corps d'éléments de robinetterie, notamment de valves, caractérisé en ce que le procédé de mise en oeuvre est obtenu par la réalisation, dans l'épaisseur du corps de valve, d'un logement (1a) de préférence circulaire pouvant permettre le positionnement de l'extrémité de profil identique de l'élément tubulaire (5), ce logement étant en communication avec un conduit (1b) débouchant à l'intérieur du corps de valve, et en ce que l'on procède, à l'aide d'un outil, à la réalisation d'une gorge (8) circulaire disposée concentrique et extérieurement au logement de l'élément tubulaire en définissant une zone de rupture de matière dans le corps, et une collerette (1c) circulaire formant manchon entourant l'élément tubulaire après fixation en vue d'une liaison dans un plan axial.
